# EUROPÄISCHE PATENTSCHRIFT

(11) **EP 3 749 612 B1**
(45) Veröffentlichungstag und Bekanntmachung des Hinweises auf die Patenterteilung: **06.05.2026**
(21) Anmeldenummer: 19704571.9
(22) Anmeldetag: 05.02.2019
(51) Int. Cl.: C02F 1/00, C02F 1/42, C02F 5/08, C02F 5/14, C02F 1/68

(54) **WASSER-FILTERPATRONE MIT TANK-VERKALKUNGSSCHUTZ**
WATER FILTER CARTRIDGE HAVING TANK LIMESCALE PROTECTION
CARTOUCHE FILTRANTE POUR DE L'EAU AVEC PROTECTION ANTITARTRE DANS LE RÉSERVOIR

(30) Priorität: 09.02.2018 DE 102018103003
(43) Veröffentlichungstag der Anmeldung: 16.12.2020
(73) Patentinhaber: ACLARIS GmbH, Lindau Zweigniederlassung Rebstein, 9445 Rebstein (CH)
(72) Erfinder: HEITELE, Bernd, 9437 Marbach (CH); WEBER, Michael, 9400 Rorschach (CH)
(74) Vertreter: RavensPAT Patentanwälte Partnerschaft mbB
(86) Internationale Anmeldenummer: PCT/EP2019/052685
(87) Internationale Veröffentlichungsnummer: WO 2019/154767

(56) Entgegenhaltungen:
- EP-A1- 2 898 782
- CN-A- 106 630 270
- DE-A1- 102012 003 528
- DE-U1- 9 408 170
- JP-A- 2006 263 718
- US-A1- 2015 053 618

## Beschreibung

Die Erfindung betrifft eine Wasser-Filterpatrone mit einem Mittel gegen Ausfällungen in einem Wassertank sowie ein Verfahren zu deren Verwendung, nach den Ansprüchen 1 und 14.

Zum Schutz vor Kalkablagerungen in Wasser führenden und/oder Wasser aufbereitenden Vorrichtungen, wie z.B. Leitungen und Geräten, sind handelsüblich Wasserfilter bekannt, insbesondere Filterpatronen für mittels einem Wassertank mit Wasser versorgte Heissgetränkebereiter, zum Schutz der Heisswasser führenden Maschinenteile.

Ein ungelöstes Problem ist dabei jedoch die Verkalkung des Wassertanks selbst. Denn, mit der Zeit fällt bei hartem Wasser Kalk im Wassertank aus und bildet dabei Kalkränder an den Innenflächen des Wassertanks.

Diese wirken unansehnlich und sind insbesondere bei Geräten, bei denen das optische Erscheinungsbild eine Rolle spielt, unerwünscht. Wie z.B. bei modernen Heissgetränkemaschinen, wie Kaffeemaschinen, Teemaschinen und dgl. mehr, bei denen der Wassertank als sichtbares Designelement in der Regel aus dursichtigem oder durchscheinendem Material ausgebildet ist.

Die DE 94 08 170 U offenbart eine an den Auslass eines Hahns einer Wasserleitung anzuschließende Vorrichtung zur Behandlung kleiner Wassermengen im Durchlauffilterverfahren.

Aufgabe der Erfindung ist es daher, unter möglichst geringer Beeinträchtigung des Gesamterscheinungsbildes solcher Heissgetränkebereiter Ablagerungen auch an deren sichtbaren, Wasser führenden und/oder Wasser speichernden Komponenten zu verhindern.

Die Lösung dieser Aufgabe erfolgt durch die Merkmale der Ansprüche 1 und 14. In den abhängigen Ansprüchen sind vorteilhafte und zweckmäßige Weiterbildungen angegeben.

Dementsprechend betrifft die Erfindung eine Wasserfilterpatrone, umfassend ein Gehäuse und ein filterseitiges Tankanschlusselement zum Einsetzen in einen Wassertank, insbesondere in einen Wassertank eines Haushaltsgeräts, und eine Filterstrecke zur Aufbereitung des dem Wassertank zu entnehmenden Wassers. Diese zeichnet sich dadurch aus, dass die Wasserfilterpatrone eine Vorratskammer mit einem Mittel gegen Ausfällungen im Wassertank umfasst, wobei die Vorratskammer von der Filterstrecke und deren Strömungsführung für das die Filterstrecke zu seiner Aufbereitung durchfließende Wasser derart getrennt ausgebildet ist, dass kein die Filterstrecke durchströmendes Wasser in Kontakt zu dem Mittel gegen Ausfällungen kommt, und dass die Vorratskammer wenigstens einen Durchlass für das Mittel aufweist, mittels der das Mittel gegen Ausfällungen in Kontakt mit dem ungefilterten Waser im Wassertank steht.

Damit kann auf das im Wassertank bevorratete Wasser bereits während dessen Lagerung im Wassertank gegen Kalkausfällungen eingewirkt werden, mit dem Ergebnis, dass die mit dem bevorrateten Wasser in Berührung kommenden Flächen frei von Kalkablagerungen bleiben und/oder davon befreit werden können.

Damit bleibt insbesondere bei aus durchsichtigen Materialien gefertigten Wassertanks deren ursprünglich sauberes Gesamterscheinungsbild, inclusive der von außen sichtbaren Innenwände, auch nach längerem Gebrauch mit wiederholtem Wassernachschub erhalten.

Weiter vorteilhaft kann dieses Mittel gegen Kalkausfällungen auch die eigentliche Aufbereitung des Wassers vor dessen Entnahme aus dem unterstützen. Dies durch die der Filterstrecke vorgelagerte Behandlung des im Tank bevorrateten Wassers.

In einer bevorzugten Ausführungsform kann die Vorratskammer im und/oder am Gehäuse der Wasserfilterpatrone angeordnet sein. Z. B. in der Form einer Kammer im Gehäuse. So kann die Vorratskammer für das Mittel gegen Ausfällungen beispielsweise in einem Deckel des Gehäuses der Wasserfilterpatrone angebracht sein. Damit kann die Wasserfilterpatrone in ihrem Erscheinungsbild im Wesentlichen unverändert gegenüber bereits bekannten Ausführungsformen ausgebildet werden.

Möglich wäre jedoch auch eine markant auffallend Ausbildung des als Vorratskammer ausgebildeten Depots. Hierdurch können Verwechslungen mit Wasserfilterpatronen ohne ein solches entgegengewirkt werden. Außerdem kann das Volumen und die Form weitgehend unabhängig von den konstruktiven Erfordernissen der Wasserfilterpatrone gestaltet werden.

Anhand von das Depot bzw. die Vorratskammer mit im Wassertank bevorratetem Wasser verbindbaren Kontaktöffnungen kann ein Zugang des Wassers zu dem Mittel gegen Ausfällungen im Wassertank bereitgestellt und damit dessen Behandlung bewirkt werden.

Solche Kontaktöffnungen können z.B. Löcher im Gehäuse, ein Netz, ein Gewebe, ein Sieb, ein Gitter oder dgl. mehr umfassen.

Gemäß einer bevorzugten Ausführung kann das Mittel gegen Ausfällungen ein Mittel gegen Kalkausfällungen sein. Damit ist es z. B. möglich ganz gezielt nur gegen Kalkablagerungen vorzugehen.

In einer weiter bevorzugten Ausführung kann ein weiteres Mittel gegen Kalkausfällungen vorgesehen sein. Z. B. ein solches Mittel, dass bereits die Bildung von Kristallkeimen stört und möglichst ganz verhindert. Und/oder ein Mittel, dass die Kalkanteile im Wasser in Lösung hält.

Beispielsweise kann das Mittel gegen Kalkausfällungen im Wassertank in einer Ausführung zuerst mit einem Netz, einem Gewebe, einem Sieb, einem Gitter oder dgl. mehr im Depot zurückgehalten sein. Damit kann eine vergleichsweise große Kontaktfläche zwischen Wasser und dem Mittel gegen Verkalkung bereitgestellt werden. Und/oder beispielswese auch um zu gewährleisten, dass es nicht unkontrolliert austreten kann.

Gemäß einer besonders bevorzugten Ausführung kann hierfür z. B. eine Wand der Vorratskammer wenigstens teilweise als Lochwand oder Sieb ausgebildet sein.

Zusätzlich können Öffnungen in dem Gehäuse der Wasserfilterpatrone und/oder einem Gehäuse des Depots ausgebildet sein, vorzugsweise mit größerem Wirkungsquerschnitt als bei Netz, Gewebe, Sieb, Gitter oder dgl. mehr, um den Fließ- und/oder Diffusionswiederstand für das Wasser und das Mittel gegen Kalkablagerung gering zu halten. Damit kann das Mittel gegen Kalkablagerung seine Wirkung auch auf das außerhalb des Depots im Wassertank bevorratete Wasser ausdehnen. Z. B. mittels eines Konzentrationsgefälles.

Da das im Wassertank bevorratete Wasser in der Regel längere Zeit darin gelagert wird, bis es zum Verbrauch entnommen und durch frisches ersetzt wird, genügt eine vergleichsweise langsam voranschreitende Wirkung der Wasserbehandlung.

Andererseits benötigt die Bildung von Kalkablagerungen auch eine entsprechende Kontaktzeit des Wassers mit der betreffenden Oberfläche, so dass eine längere Lagerzeit zwar einerseits die Bildung von Kalkablagerungen fördert, andererseits aber das Mittel gegen Kalkablagerungen mit zunehmender Lagerzeit seine Wirkung im Wasser intensivieren und damit Kalkablagerungen umso besser entgegenwirken kann.

Somit kann die Vorratskammer gemäß einer Ausführung im Gehäuse der Filterpatrone angeordnet sein.

Gemäß einer bevorzugten Ausführungsform kann wenigstens eines der Mittel gegen Ausfällungen, insbesondere gegen Kalkausfällungen im Wassertank einen schwach sauren Kationentauscher umfassen. Damit kann auf die Härte des Wassers im Wassertank eingewirkt werden.

Gemäß einer weiter bevorzugten Ausführungsform kann wenigstens eines der Mittel gegen Ausfällungen, insbesondere gegen Kalkausfällungen im Wassertank einen Härtestabilisierer umfassen. Damit kann störend auf die Keimbildung und damit auf den Ausfällprozess eingewirkt werden.

Vorteilhaft kann wenigstens eines der Mittel gegen Kalkausfällungen im Wassertank ein schwer lösliches Polyphosphat umfassen. Insbesondere ein schwer lösliches Polyphosphat auf Calciumbasis. Hierdurch kann eine langsame Reaktionszeit bewirkt und damit eine zu starke Dosierung bzw. Konzentration von Polyphosphat im bevorrateten Wasser vermieden werden.

Alternativ oder zusätzlich kann wenigstens eines der Mittel gegen Ausfällungen, insbesondere gegen Kalkausfällungen im Wassertank ein basisches, insbesondere schwach basisches Anionentauschermaterial umfassen, bevorzugt mit Polyphosphationen als Gegenionen. Dieses hat gegenüber einem stark basischen Anionentauschermaterial den Vorteil einer höheren Kapazität. Das heiß, es kann vergleichsweise stärker beladen werden. Bzw. ist für die selbe Beladung entprechend weniger Anionentauschermaterial und damit weniger Speichervolumen erforderlich. Dies erleichtert wiederum die Unterbringung. D.h, es ist weniger Platz erforderlich.

Insbesondere kann das basische und/oder schwach basische Anionentauschermaterial als Stabilisierungsmittel für das Polyphosphat vorgesehen sein. Damit kann die Lagerfähigkeit des Mittels gegen Kalkausfällungen im Wassertank deutlich verbessert werden. Sogar soweit, dass es gemeinsam mit einem Kationentauscher in der Wasserfilterpatrone stabil gelagert werden kann, ohne dass z. B. Ausblühungen und freies Wasser an der Oberfläche des Polyphosphats auftreten, welches in einer Folienverpackung verteilt wird und dann weiße Flecken auf Produkt hinterlässt.

Gemäß einer weiteren Ausführungsform kann wenigstens eines der Mittel gegen Ausfällungen, insbesondere gegen Kalkausfällungen im Wassertank ein leicht lösliches Polyphosphat auf Natriumbasis umfassen.

Zusammenfassend kann festgehalten werden, dass herkömmliche Filterpatronen gegen eine Verkalkung von Wassertanks wirkungslos sind, da das bevorratete Wasser erst im Inneren der Filterpatrone beim Durchfließen des darin angeordneten Filterbettes aufbereitet wird, wobei das Wasser erst unmittelbar vor der Benutzung, also zum Zweck der Zurverfügungstellung für das aufzubereitende Heißgetränk, aus dem Wassertank durch den Filter in die Maschine gesaugt wird.

Hierzu ist die Wasserfilterpatrone zum Einbau in einen Wassertank eines Haushaltsgeräts zumindest teilweise mit einem ersten Enthärtungs- und/oder Entcarbonierungsgranulat befüllt, wobei das Wasser aus dem Wassertank vorzugsweise mittels Saugmitteln durch die Filterpatrone und das Granulat gezogen wird.

Das stromaufwärts der Wasserfilterpatrone im Wassertank bevorratete Rohwasser bleibt von dieser Behandlung jedoch unberührt.

Es wird daher vorgeschlagen, eine solche Wasserfilterpatrone zusätzlich mit einem Härtestabilisierungsmittel und/oder Reduktionsmittel für Wasserhärte zur Verhinderung von Kalkausfällung im Wassertankinneren auszustatten, so dass das im Wassertank stromaufwärts der Wasserfilterpatrone bevorratende Wasser damit in Kontakt kommen kann.

Hierzu kann die Filterpatrone z.B. im Deckel und/oder auch an ihrer Aussenseite einen zusätzlichen Behälter umfassen, der das Schutzmittel gegen Ausfällungen, insbesondere gegen Kalkausfällungen enthält und zumindest eine Kontaktstelle und/oder Kontaktöffnung zwischen dem Mittel gegen Ausfällungen, insbesondere gegen Kalkausfällungen und Tankwasser aufweist.

Auch kann an der Wasserfilterpatrone ein zusätzlicher Ring oder dgl. mit Ionenaustauscher- oder Härtestabilisierungsmittel vorgesehen sein. Z.B. mit schwerlöslichem Polyphosphat gefüllt.

Bevorzugt wird eine Kammer zur Aufnahme eines Stabilisierungsmittels in einem Deckel der Wasserfilterpatrone ausgebildet. Hierdurch ist kein zusätzlicher Platzbedarf zur Unterbringung des Stabilisierungsmittels erforderlich.

Als Mittel gegen Ausfällungen, insbesondere gegen Kalkausfällungen wird erfindungsgemäß ein basischer Anionenaustauscher mit einem Anteil von Gegenionen in Polyphosphatform eingesetzt.

Üblicherweise werden einem Rohwasser zur Härtestabilisierung Polyphosphate zudosiert. Hierzu gibt es einerseits die Möglichkeit der Flüssigdosierung mit leicht löslichen Polyphosphaten oder einer löslichkeitsgesteuerten Dosierung über den Kontakt mit schwerlöslichen Polyphosphaten.

Bei leicht löslichen Polyphosphaten kann es sich überwiegend um Natriumsalze der Polyphosphate handeln entsprechend bei den schwerlöslichen um Calcium oder Magnesiumsalze der Polyphosphate.

Bei der Dosierung in den Wassertank besteht bisher das Problem, dass das schwerlösliche Salz für den Verkalkungsschutz nicht ausreichend Polyphosphat abgibt. Weiterhin kann das schwerlösliche Polyphosphat nicht gemeinsam mit einem Tankfilter gelagert werden, da der schwach saure Ionenaustauscher eine Umgebungsfeuchte von über 80% relativer Luftfeuchtigkeit in einer luftdichten Folienverpackung erzeugt. Schwerlösliches Polyphosphat kann jedoch nicht bei einer relativen Luftfeuchte grösser 50% stabil gelagert werden. Die Folge einer gemeinsamen Verpackung von schwerlöslichem Polyphosphat und feuchtem Ionenaustauscher sind damit Ausblühungen und freies Wasser an der Oberfläche des Polyphosphats, welches in einer Folienverpackung verteilt wird und dann weiße Flecken auf Produkt hinterlässt.

Die Verwendung des flüssigen Polyphosphats ist ebenfalls schwierig, da der Dosierprozess im Anwendungsfall über 3 Monate anhalten muss, ohne Überdosierung. Es kann zwar die Abgabe über eine geringe Kontaktfläche und Diffusion in einem gewissen Masse eingestellt werden, das Problem der Lagerung (Ausrinnen - Eintrocknen) und auch der Überdosierung bei langem Kontakt ist damit jedoch kaum zu lösen.

Zur Herstellung wird nun das zunächst flüssige Polyphosphat an einen bevorzugt schwach basischen Anionenaustauscher ionisch gebunden. Denn schwach basische Anionentauscher haben eine wesentlich höhere Ladekapazität als vergleichsweise stark basische. Damit kann die selbe Ladekapazität mit einer vergleichsweise deutlich geringerer Menge Anionentauscher bereitgestellt werden, als mit einem stark basischen Anionentauscher. Entsprechend reduziert sich auch der hierfür erforderliche Platzbedarf bzw. das erforderliche Volumen.

Der so behandelte Austauscher kann sowohl trocken als auch nass nahezu unbegrenzt gelagert werden. Auch ist die Polyphosphatabgabe im Kontakt mit Wasser durch Ionenaustauschgleichgewichtsreaktionen mit den Wasserinhaltsstoffen nach oben hin begrenzt. Unterhalb des Gleichgewichts mit dem Rohwasser ist jedoch die Abgaberate hoch, so dass ausreichend Polyphosphat über einen langen Zeitraum abgegeben werden kann.

Die Formel für die Abgabe in einer Applikation, z.B. einen Wassertank, lautet:
- R⁺_{N}:: schwach basischer Anionentauscher
- [H₂PO₄⁻]_{N}:: Polyphosphat mit Kettenlänge N und N negativen Ladungen
- HCO₃⁻:: Hydrogencarbonat

R⁺_{N} [H₂PO₄⁻]_{N} + N[HCO₃⁻] ↔ R⁺_{N} [HCO₃⁻] + [H₂PO₄⁻]_{N}

Das Polyphosphat wirkt dabei als Keiminhibitor gegen die Bildung von CaCO3 Kristallen.

Die Wasserfilterpatrone kann in vorteilhafter Weise mit einem filterseitigen Anschlusselement zum Anschluss an ein komplementäres, als Sauganschluss ausgebildetes tankseitiges Anschlusselement eines Wassertanks ausgebildet sein.

Dies ermöglicht einen Anschluss der Wasserfilterpatrone an einem Tankboden. Z.B. um im Saugbetrieb betrieben werden.

### Ausführungsbeispiel:

Die vorliegende Erfindung wird nachfolgend anhand der beigefügten Figuren und der darauf bezugnehmenden Beschreibung näher erläutert.

### Es zeigen:

- Fig. 1: beispielhaft und schematisch, eine Wasserfilterpatrone in Längsquerschnitt dargestellt, beim Einsatz in einen ebenfalls in Längsquerschnitt dargestellten Wassertank.
- Fig.2: beispielhaft und schematisch einen Abschnitt einer zur Fig. 1 alternativen Ausführungsform einer Wasserfilterpatrone mit einem Depot für ein Mittel gegen Kalkausfällungen in Frontalansicht.
- Fig. 3: beispielhaft und schematisch eine Schnittdarstellung zur Ausführungsform gemäß Fig. 2

### Konstruktive Ausführung:

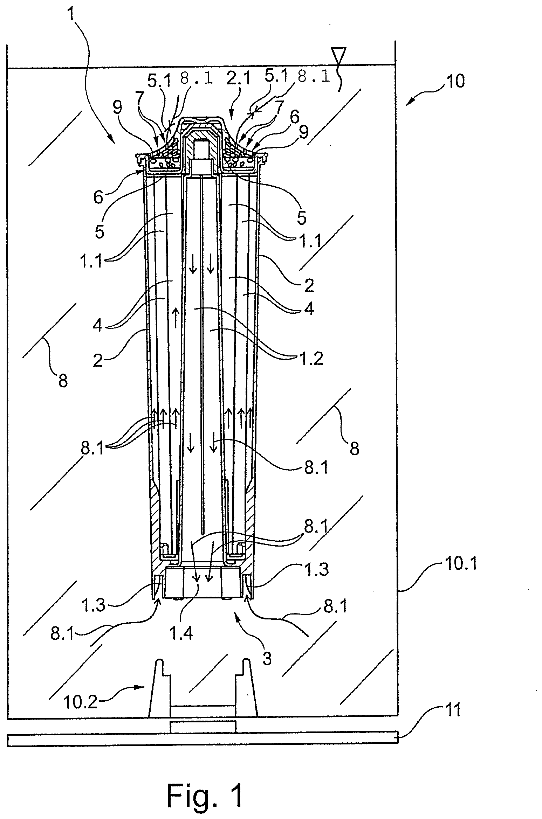

**Figur 1** zeigt eine Wasserfilterpatrone 1 beim Einsatz in einen Wassertank 10, dessen Gehäuse mit 10.1 nummeriert ist. Hierzu wird das filterseitige Tankanschlusselement 3 mit einem tankseitigen Filteranschlusselement 10.2 verbunden. Vorzugsweise mittels einer Steckverbindung.

Die Wasserfilterpatrone 1 umfasst ein Gehäuse 2, eine Einlassöffnung 1.3 und eine Auslassöffnung 1.4 für den Zu- und Ablauf des im Wassertank bevorrateten Wassers 8, in die Filterpatrone 1 hinein und wieder heraus. Dieses Wasser 8 wird dabei zur Aufbereitung für die Verwendung in z.B. einer stromabwärtig angeschlossenen Heißgetränkemaschine 11 über eine Filterstrecke 4 geführt. Eine solche Filterstrecke kann in der Aufstromkammer 1.1 und/oder der Abstromkammer 1.2 ausgebildet sein. Die Pfeile 8.1 symbolisieren die Fließrichtung des Wassers bei dessen Entnahme aus dem Wassertank 10, wenn die Filterpatrone 1 in fertig eingesetztem Zustand im Filterbetrieb arbeitet.

Die Wasserfilterpatrone 1 umfasst erfindungsgemäß, zusätzlich zur Filterstrecke 4 und von dieser getrennt ausgebildet, ein Depot in der Form einer Vorratskammer 6 für wenigstens ein Mittel 5 gegen Ausfällungen im Wassertank, insbesondere für wenigstens ein Mittel gegen Kalkausfällungen im Wassertank, wobei Kontaktöffnungen 7 vorgesehen sind, die das Depot in der Form der Vorratskammer 6 mit dem im Wassertank 10 bevorratetem Wasser 8 verbinden.

Die Vorratskammer 6 kann im Gehäuse 2 der Wasserfilterpatrone 1 angeordnet sein. Im dargestellten Fall ist dies in einem Deckel 2.1 des Gehäuses 2 realisisert.

Das wenigstens eine Mittel 5 gegen Ausfällungen, insbesondere gegen Kalkausfällungen im Wassertank kann einen sauren Kationentauscher, insbesondere einen schwach sauren Kationentauscher umfassen und/oder einen Härtestabilisierer und/oder ein schwer lösliches Polyphosphat, insbesondere auf Calciumbasis.

Das wenigstens eine Mittel 5 gegen Ausfällungen, insbesondere gegen Kalkausfällungen im Wassertank kann auch ein leicht lösliches Polyphosphat auf Natriumbasis umfassen.

Weiterhin kann das wenigstens eine Mittel 5 gegen Ausfällungen, insbesondere gegen Kalkausfällungen im Wassertank ein basisches Anionentauschermaterial umfassen, bevorzugt mit Polyphosphationen als Gegenionen. Zur Bereitstellung einer höheren Kapazität wird ein schwach basisches Anionentauschermaterial verwendet, insbesondere ein schwach basisches Anionentauschermaterial mit Polyphosphationen als Gegenionen.

Und das schwach basische Anionentauschermaterial kann als Stabilisierungsmittel für das Polyphosphat vorgesehen sein.

Die Pfeile 8.1 symbolisieren den Zustrom des im Wassertank 10 bevorrateten Wassers 8, zu dem wenigstens einen Mittel 5 gegen Ausfällungen, insbesondere gegen Kalkausfällungen im Wassertank. Es fließt durch die Kontaktöffnungen 7 in das Depot zum Mittel 5. Ggf. ist auch ein Flies 9 oder dgl. vorgesehenen, um das Mittel 5 zusätzlich einzuschließen.

Die Pfeile 5.1 symbolisieren im Wassertank 10 bevorratetes Wasser 8, welches mit dem wenigstens einen Mittel 5 gegen Ausfällungen, insbesondere gegen Kalkausfällungen im Wassertank bereits behandelt ist. Aufgrund der höheren Konzentration der Behandlungsstoffe aus dem wenigstens einen Mittel 5 im Wasser 8 in der Nähe des wenigstens einen Mittels 5, im Vergleich zu an anderer Stelle des Wassertanks bevorratetem, noch nicht mit dem wenigstens einen Mittel 5 in Kontakt gekommenen Wasser wird ein Konzentrationsausgleich angestoßen, der im Laufe der Lagerzeit eine Behandlung auch des übrigen im Wassertank gelagerten Wassers und damit erfindungsgemäß eine Vermeidung von Ausfällungen, insbesondere Kalkausfällungen an den mit dem Wasser in Kontakt kommenden Flächen bewirkt.

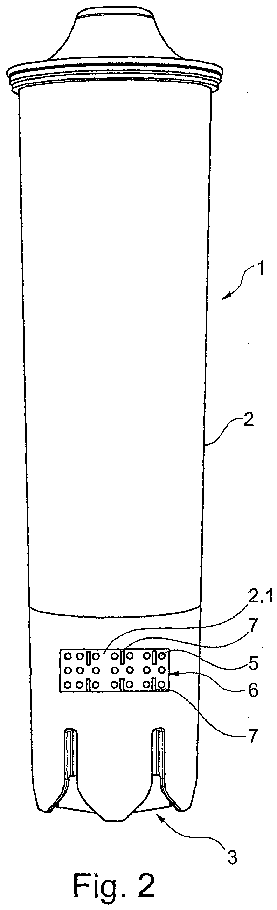

**Figur 2** zeigt beispielhaft und schematisch eine Darstellung einer zur Fig. 1 alternativen Ausführungsform einer Wasserfilterpatrone 1 mit einem filterseitigen Tankanschlusselement 3 und einem Depot in der Form einer Vorratskammer 6 für wenigstens ein Mittel 5 gegen Ausfällungen, insbesondere gegen Kalkausfällungen in Frontalansicht. Hierbei kann ein Depot 6 für das wenigsten eine Mittel 5 gegen Ausfällungen, insbesondere gegen Kalkausfällungen in und/oder an dem Gehäuse 2 angeordnet sein. Zur Visualisierung des vorzugsweise granulatförmigen Mittels 5 sind kleine Kreise dargestellt. Das Granulat 5 kann mittels einem Abdeckmittel 2.1, z.B. entsprechend dem Deckel 2.1 in der Ausführung gem. Fig. 1, in dem Depot 6 gehalten sein.

Auch hier können Kontaktöffnungen 7 einen Zugang für Wasser zum Mittel 5 ermöglichen. Die rechteckige Darstellung der Kontaktöffnungen 7 ist rein beispielhaft zur besseren Unterscheidung in dieser Visualisierung. Sie können durchaus auch andere Konturen und/oder Querschnitte aufweisen. Diese Ausführungsform mit vergleichsweise nahe am Wassereinlass und/oder am Wasserauslass angeordnetem Depot 6 für das wenigstens eine Mittel 5 gegen Ausfällungen, insbesondere gegen Kalkausfällungen kann z.B. für Wassertanks mit niedriger Höhe vorteilhaft sein. Insbesondere kann aufgrund der bezogen auf die Betriebsstellung der Wasserfilterpatrone niedrigen Anordnung eine möglichst lange Kontaktzeit des Verkalkungsschutzmittels mit dem die Wasserfilterpatrone umgebenden Wasser realisiert werden.

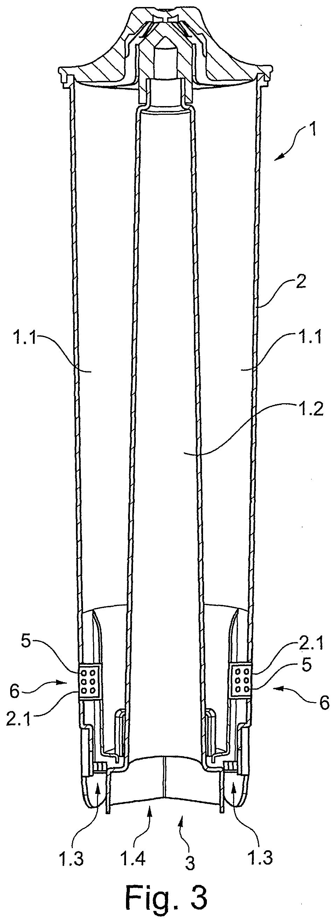

Die **Figur 3** zeigt eine Schnittdarstellung zu der in Fig. 2 dargestellten Ausführung einer Wasserfilterpatrone 1, mit an gegenüberliegenden Seiten des Gehäuses 2 angeordneten Depots 6 für das wenigstens eine Mittel 5 gegen Ausfällungen, insbesondere gegen Kalkausfällungen. Kontaktöffnungen für einen Zugang für Wasser zu dem wenigstens einen Mittel 5 sind aus Gründen der einfacheren Darstellung nicht gezeigt, können jedoch vorhanden sein. Die übrigen Bezugszeichen entsprechen den zu Figur 1 dargelegten Merkmalen der Wasserfilterpatrone 1.

### Bezugszeichenliste:

1 Wasserfilterpatrone
1.1 Aufstromkammer
1.2 Abstromkammer
1.3 Einlassöffnung
1.4 Auslassöffnung
2 Gehäuse
2.1 Deckel
3 filterseitiges Tankanschlusselement
4 Filterstrecke
5 Mittel gegen Kalkausfällungen
5.1 mit Mittel gegen Kalkausfällungen behandeltes Wasser
6 Depot
7 Kontaktöffnungen
8 Wasser
8.1 Pfeil
9 Flies oder dgl.
10 Wassertank
10.1 Gehäuse
10.2 tankseitiges Filteranschlusselement
11 Haushaltsgerät, insbes. Heißgetränkemaschine

## Patentansprüche

1. Wasserfilterpatrone (1), umfassend ein Gehäuse (2) und ein filterseitiges Tankanschlusselement (3) zum Einsetzen in einen Wassertank (10), insbesondere in einen Wassertank (10) eines Haushaltsgeräts (11), und zum Anschluss an ein komplementäres, als Sauganschluss ausgebildetes tankseitiges Anschlusselement am Tankboden des Wassertanks, sowie eine Einlassöffnung (1.3) und eine Auslassöffnung (1.4) für den Zu- und Ablauf von im Wassertank (10) bevorrateten Wasser (8) in die Filterpatrone (1) hinein und wieder heraus, wobei die Auslassöffnung (1.4) im Inneren des filterseitigen Tankanschlusselement (3) ausgebildet ist und die Einlassöffnung (1.3) in dem das filterseitige Tankanschlusselement (3) umgebenden Bereich der Wasserfilterpatrone (1) ausgebildet ist, und eine Filterstrecke (4) zur Aufbereitung des dem Wassertank (10) zu entnehmenden Wassers (8), wobei die Wasserfilterpatrone (1) eine Vorratskammer (6) mit einem Mittel (5) gegen Ausfällungen im Wassertank (10) umfasst, wobei die Vorratskammer (6) von der Filterstrecke (4) und deren Strömungsführung für das die Filterstrecke (4) zu seiner Aufbereitung durchfließende Wasser (8.1) getrennt ausgebildet ist, wobei die Vorratskammer (6) wenigstens einen Durchlass in der Form einer Kontaktöffnung (7) für den Zustrom des Wassers (8) aus dem Wassertank (10) zu dem Mittel (5) gegen Ausfällungen im Wassertank (10) aufweist, mittels welcher Kontaktöffnung (7) das Mittel (5) gegen Ausfällungen in Kontakt mit dem ungefilterten Wasser (8) im Wassertank (1) steht.

2. Wasserfilterpatrone nach Anspruch 1, **dadurch gekennzeichnet, dass** die Vorratskammer (6) im und/oder am Gehäuse (2) der Wasserfilterpatrone (1) angeordnet ist.

3. Wasserfilterpatrone nach Anspruch 1 oder 2, **dadurch gekennzeichnet, dass** die Vorratskammer (6) für das Mittel (5) gegen Ausfällungen in einem Deckel (2.1) des Gehäuses der Wasserfilterpatrone angebracht ist.

4. Wasserfilterpatrone nach einem der vorangehenden Ansprüche, **dadurch gekennzeichnet, dass** eine Wand der Vorratskammer (6) wenigstens teilweise als Lochwand oder Sieb ausgebildet ist.

5. Wasserfilterpatrone nach einem der vorangehenden Ansprüche, **dadurch gekennzeichnet, dass** das Mittel (5) gegen Ausfällungen ein Mittel (5) gegen Kalkausfällungen ist.

6. Wasserfilterpatrone nach einem der vorangehenden Ansprüche, **dadurch gekennzeichnet, dass** ein weiteres Mittel (5) gegen Kalkausfällungen vorgesehen ist.

7. Wasserfilterpatrone nach einem der vorangehenden Ansprüche, **dadurch gekennzeichnet, dass** wenigstens eines der Mittel (5) gegen Kalkausfällungen einen Härtestabilisierer umfasst.

8. Wasserfilterpatrone nach einem der vorangehenden Ansprüche, **dadurch gekennzeichnet, dass** wenigstens eines der Mittel (5) gegen Kalkausfällungen ein schwer lösliches Polyphosphat umfasst, insbesondere auf Calciumbasis.

9. Wasserfilterpatrone nach einem der vorangehenden Ansprüche, **dadurch gekennzeichnet, dass** wenigstens eines der Mittel (5) gegen Kalkausfällungen ein leicht lösliches Polyphosphat auf Natriumbasis umfasst.

10. Wasserfilterpatrone nach einem der vorangehenden Ansprüche 7 oder 8, **dadurch gekennzeichnet, dass** ein Stabilisierungsmittel für das Polyphosphat vorgesehen ist.

11. Wasserfilterpatrone nach Anspruch 9, **dadurch gekennzeichnet, dass** ein basisches Anionentauschermaterial, insbesondere mit Polyphosphationen als Gegenionen, als Stabilisierungsmittel vorgesehen ist.

12. Wasserfilterpatrone nach einem der vorangehenden Ansprüche 9 oder 10, **dadurch gekennzeichnet, dass** ein schwach basisches Anionentauschermaterial, bevorzugt mit Polyphosphationen als Gegenionen, als Stabilisierungsmittel vorgesehen ist.

13. Wasserfilterpatrone nach einem der vorangehenden Ansprüche, **dadurch gekennzeichnet, dass** sie mit einem filterseitigen Anschlusselement zum Anschluss an ein komplementäres, als Sauganschluss ausgebildetes tankseitiges Anschlusselement eines Wassertanks ausgebildet ist.

14. Verwendung einer Wasserfilterpatrone (1), welche umfasst ein Gehäuse (2) und ein filterseitiges Tankanschlusselement (3) zum Einsetzen in einen Wassertank (10) eines Haushaltsgeräts (11) und eine Filterstrecke (4) zur Aufbereitung des dem Wassertank (10) zu entnehmenden Wassers (8), **dadurch gekennzeichnet, dass** die Wasserfilterpatrone (1) eine Vorratskammer (6) mit einem Mittel (5) gegen Ausfällungen im Wassertank (10) umfasst, wobei die Vorratskammer (6) von der Filterstrecke (4) und deren Strömungsführung für das die Filterstrecke (4) zu seiner Aufbereitung durchfließende Wasser (8.1) getrennt ausgebildet ist, wobei die Vorratskammer (6) wenigstens einen Durchlass in der Form einer Kontaktöffnung (7) für den Zustrom des Wassers (8) aus dem Wassertank (10) zu dem Mittel (5) gegen Ausfällungen im Wassertank (10) aufweist, mittels welcher Kontaktöffnung (7) das Mittel (5) gegen Ausfällungen in Kontakt mit dem ungefilterten Wasser im Wassertank (10) steht, wobei die Wasserfilterpatrone (1) zur Reduzierung von Ausfällungen in dem Wassertank (10) eines Haushaltsgeräts (11) eingesetzt wird.

## Claims

1. Water filter cartridge (1) comprising a housing (2) and a filter-side tank connection element (3) for insertion into a water tank (10), more particularly into a water tank (10) of a household appliance (11), and for connection to a complementary, tank-side connection element, formed as a suction port, at the tank base of the water tank, and also an inlet opening (1.3) and an outlet opening (1.4) for the ingress and egress of water (8) stored in the water tank (10) into and out of the filter cartridge (1), wherein the outlet opening (1.4) is formed inside the filter-side tank connection element (3) and the inlet opening (1.3) is formed in the region of the water filter cartridge (1) that surrounds the filter-side tank connection element (3), and a filter section (4) for treating the water (8) to be removed from the water tank (10), wherein the water filter cartridge (1) comprises a storage chamber (6) with a means (5) to counter precipitations in the water tank (10), wherein the storage chamber (6) is formed separately from the filter section (4) and its flow routing for the water (8.1) flowing for treatment thereof through the filter section (4), wherein the storage chamber (6) has at least one passage in the form of a contact opening (7) for the inflow of the water (8) from the water tank (10) to the means (5) to counter precipitations in the water tank (10), by means of which contact opening (7) the means (5) to counter precipitations is in contact with the unfiltered water (8) in the water tank (1).

2. Water filter cartridge according to Claim 1, **characterized in that** the storage chamber (6) is arranged in and/or on the housing (2) of the water filter cartridge (1).

3. Water filter cartridge according to Claim 1 or 2, **characterized in that** the storage chamber (6) for the means (5) to counter precipitations is mounted in a lid (2.1) of the housing of the water filter cartridge.

4. Water filter cartridge according to any of the preceding claims, **characterized in that** a wall of the storage chamber (6) is formed at least partially as a perforated wall or screen.

5. Water filter cartridge according to any of the preceding claims, **characterized in that** the means (5) to counter precipitations is a means (5) to counter limescale precipitations.

6. Water filter cartridge according to any of the preceding claims, **characterized in that** there is a further means (5) to counter limescale precipitations.

7. Water filter cartridge according to any of the preceding claims, **characterized in that** at least one of the means (5) to counter limescale precipitations comprises a hardness stabilizer.

8. Water filter cartridge according to any of the preceding claims, **characterized in that** at least one of the means (5) to counter limescale precipitations comprises a sparingly soluble polyphosphate, based more particularly on calcium.

9. Water filter cartridge according to any of the preceding claims, **characterized in that** at least one of the means (5) to counter limescale precipitations comprises a readily soluble polyphosphate based on sodium.

10. Water filter cartridge according to either of preceding Claims 7 and 8, **characterized in that** there is a stabilizing agent for the polyphosphate.

11. Water filter cartridge according to Claim 9, **characterized in that** there is a basic anion exchanger material, more particularly with polyphosphate ions as counterions, as stabilizing agent.

12. Water filter cartridge according to either of preceding Claims 9 and 10, **characterized in that** there is a weakly basic anion exchanger material, preferably with polyphosphate ions as counterions, as stabilizing agent.

13. Water filter cartridge according to any of the preceding claims, **characterized in that** it is formed with a filter-side connection element for connection to a complementary, tank-side connection element, formed as a suction port, of a water tank.

14. Use of a water filter cartridge (1), which comprises a housing (2) and a filter-side tank connection element (3) for insertion into a water tank (10) of a household appliance (11) and a filter section (4) for treating the water (8) to be removed from the water tank (10), **characterized in that** the water filter cartridge (1) comprises a storage chamber (6) with a means (5) to counter precipitations in the water tank (10), wherein the storage chamber (6) is formed separately from the filter section (4) and its flow routing for the water (8.1) flowing for treatment thereof through the filter section (4), wherein the storage chamber (6) has at least one passage in the form of a contact opening (7) for the inflow of the water (8) from the water tank (10) to the means (5) to counter precipitations in the water tank (10), by means of which contact opening (7) the means (5) to counter precipitations is in contact with the unfiltered water in the water tank (10), wherein the water filter cartridge (1) is used for reducing precipitations in the water tank (10) of a household appliance (11).

## Revendications

1. Cartouche filtrante d'eau (1), comprenant un boîtier (2) et un élément de raccordement (3) à un réservoir côté filtre, destinée à être placée dans un réservoir à eau (10), en particulier dans un réservoir à eau (10) d'un appareil domestique (11), et à se raccorder à un élément de raccordement complémentaire, réalisé en tant que raccordement d'aspiration, côté réservoir au niveau du fond du réservoir à eau, ainsi qu'une ouverture d'entrée (1.3) et une ouverture de sortie (1.4) pour l'arrivée et l'évacuation de l'eau (8) stockée dans le réservoir à eau (10) dans la cartouche filtrante (1) et hors de celle-ci, l'ouverture de sortie (1.4) étant réalisée à l'intérieur de l'élément de raccordement (3) à un réservoir côté filtre et l'ouverture d'entrée (1.3) étant réalisée dans la zone entourant l'élément de raccordement (3) à un réservoir côté filtre de la cartouche filtrante d'eau (1), et une zone de filtration (4) pour le traitement de l'eau (8) à prélever du réservoir à eau (10), la cartouche filtrante d'eau (1) comprenant une chambre de stockage (6) présentant un agent (5) contre les précipitations dans le réservoir à eau (10), la chambre de stockage (6) étant réalisée séparément de la zone de filtration (4) et de son guidage d'écoulement pour l'eau (8.1) s'écoulant à travers la zone de filtration (4) pour son traitement, la chambre de stockage (6) présentant au moins un passage sous la forme d'une ouverture de contact (7) pour l'afflux de l'eau (8) provenant du réservoir à eau (10) vers l'agent (5) contre les précipitations dans le réservoir à eau (10), l'agent (5) contre les précipitations étant en contact avec l'eau (8) non filtrée dans le réservoir à eau (1) par l'intermédiaire de ladite ouverture de contact (7).

2. Cartouche filtrante d'eau selon la revendication 1, **caractérisée en ce que** la chambre de stockage (6) est agencée dans et/ou sur le boîtier (2) de la cartouche filtrante d'eau (1).

3. Cartouche filtrante d'eau selon la revendication 1 ou 2, **caractérisée en ce que** la chambre de stockage (6) pour l'agent (5) contre les précipitations est disposée dans un couvercle (2.1) du boîtier de la cartouche filtrante d'eau.

4. Cartouche filtrante d'eau selon l'une des revendications précédentes, **caractérisée en ce qu'**une paroi de la chambre de stockage (6) est réalisée au moins en partie sous forme de paroi perforée ou de tamis.

5. Cartouche filtrante d'eau selon l'une des revendications précédentes, **caractérisée en ce que** l'agent (5) contre les précipitations est un agent (5) contre les précipitations de calcaire.

6. Cartouche filtrante d'eau selon l'une des revendications précédentes, **caractérisée en ce qu'**un autre agent (5) contre les précipitations de calcaire est prévu.

7. Cartouche filtrante d'eau selon l'une des revendications précédentes, **caractérisée en ce qu'**au moins l'un des agents (5) contre les précipitations de calcaire est un stabilisant de dureté.

8. Cartouche filtrante d'eau selon l'une des revendications précédentes, **caractérisée en ce qu'**au moins l'un des agents (5) contre les précipitations de calcaire comprend un polyphosphate peu soluble, en particulier à base de calcium.

9. Cartouche filtrante d'eau selon l'une des revendications précédentes, **caractérisée en ce qu'**au moins l'un des agents (5) contre les précipitations de calcaire comprend un polyphosphate facilement soluble à base de sodium.

10. Cartouche filtrante d'eau selon l'une des revendications précédentes 7 ou 8, **caractérisée en ce qu'**un agent de stabilisation pour le polyphosphate est prévu.

11. Cartouche filtrante d'eau selon la revendication 9, **caractérisée en ce qu'**un matériau basique échangeur d'anions, présentant en particulier des ions polyphosphate en tant que contre-ions, est prévu comme agent de stabilisation.

12. Cartouche filtrante d'eau selon l'une des revendications précédentes 9 ou 10, **caractérisée en ce qu'**un matériau faiblement basique échangeur d'anions, présentant de préférence des ions polyphosphate en tant que contre-ions, est prévu comme agent de stabilisation.

13. Cartouche filtrante d'eau selon l'une des revendications précédentes, **caractérisée en ce qu'**elle est réalisée avec un élément de raccordement côté filtre pour le raccordement à un élément de raccordement complémentaire, réalisé en tant que raccordement d'aspiration, côté réservoir, d'un réservoir à eau.

14. Utilisation d'une cartouche filtrante d'eau (1), qui comprend un boîtier (2) et un élément de raccordement (3) à un réservoir côté filtre, destinée à être placée dans un réservoir à eau (10) d'un appareil domestique (11) et une zone de filtration (4) pour le traitement de l'eau (8) à prélever du réservoir à eau (10), **caractérisée en ce que** la cartouche filtrante d'eau (1) comprend une chambre de stockage (6) présentant un agent (5) contre les précipitations dans le réservoir à eau (10), la chambre de stockage (6) étant réalisée séparément de la zone de filtration (4) et de son guidage d'écoulement pour l'eau (8.1) s'écoulant à travers la zone de filtration (4) pour son traitement, la chambre de stockage (6) présentant au moins un passage sous la forme d'une ouverture de contact (7) pour l'afflux de l'eau (8) provenant du réservoir à eau (10) vers l'agent (5) contre les précipitations dans le réservoir à eau (10), l'agent (5) contre les précipitations étant en contact avec l'eau non filtrée dans le réservoir à eau (10) par l'intermédiaire de l'ouverture de contact (7), la cartouche filtrante d'eau (1) étant utilisée pour la réduction de précipitations dans le réservoir à eau (10) d'un appareil domestique (11).
